# EUROPÄISCHE PATENTSCHRIFT

(11) **EP 4 134 588 B1**
(45) Veröffentlichungstag und Bekanntmachung des Hinweises auf die Patenterteilung: **02.07.2025**
(21) Anmeldenummer: 22164603.7
(22) Anmeldetag: 28.03.2022
(51) Int. Cl.: F23N 1/00, F23N 3/08, F23N 5/24

(54) **VERFAHREN ZUM PRÜFEN EINER ABGASANLAGE EINES HEIZGERÄTES**
METHOD FOR TESTING A WASTE GAS SYSTEM OF A HEATER
PROCÉDÉ DE VÉRIFICATION D'UNE INSTALLATION DE GAZ D'ÉCHAPPEMENT D'UN APPAREIL DE CHAUFFAGE

(30) Priorität: 15.04.2021 DE 102021109473
(43) Veröffentlichungstag der Anmeldung: 15.02.2023
(73) Patentinhaber: Vaillant GmbH, 42859 Remscheid NRW (DE)
(72) Erfinder: Chauvin, David, 44640 LE PELLERIN (FR); Rouxel, Jean-François, 44260 La Chapelle Launay (FR); Richard, Patrice, 44300 Nantes (FR); Ligonniere, Bruno, 44850 St Mars du Desert (FR); Chaillou, Tony, 44980 Sainte Luce sur Loire (FR)
(74) Vertreter: Popp, Carsten

(56) Entgegenhaltungen:
- EP-A1- 2 469 168
- EP-A1- 3 260 777
- EP-A2- 1 260 766
- EP-A2- 1 519 113

## Beschreibung

Die Erfindung betrifft ein Verfahren zum Prüfen einer Abgasanlage eines Heizgerätes, ein Computerprogramm, ein Steuergerät und ein Heizgerät.

Aus Sicherheitsgründen ist bei gasbetriebenen Heizgeräten nach der EN 15502-2-1 eine Überwachung der Verbrennung vorgeschrieben.

Ein Heizgerät muss bei einer Erhöhung des Strömungswiderstandes der Abgasanlage, beispielsweise bei zu hoher Verschmutzung, zur Vermeidung des Austretens von Kohlenmonoxid eine Inbetriebnahme blockieren. Im Rahmen einer vorgeschriebenen Überwachung der Verbrennungsprodukte sollte sich ein Heizgerät ab einem bestimmten Anteil von Kohlenmonoxid im Abgas selbst außer Betrieb setzen und ein Neustart sollte blockiert werden.

Hierzu wird in der DE 10 2008 006 120 A1 vorgeschlagen, während des Betriebes eines Heizgerätes mit einer Soll-Heizleistung eine Soll-Leistungsaufnahme und einen zulässigen Abweichungsbereichs derselben einer Verbrennungsluftzuführanordnung vorzugegeben. Sofern eine (erfasste) Vergleichs-Leistungsaufnahme außerhalb des zulässigen Abweichungsbereich der Soll-Leistungsaufnahme liegt, kann von einem Verdämmungszustand im Verbrennungsluftströmungsweg und/oder im Abgasströmungsweg des Heizgerätes ausgegangen werden. Gegebenenfalls würde bei Durchführung des dortigen Verfahrens jedoch eine Erhöhung des Strömungswiderstandes erst nach Inbetriebnahme des Heizgerätes festgestellt werden.

Die EP 1 519 113 A2 schlägt ein Verfahren zur Anpassung einer Geräteheizleistung eines gebläseunterstützten Heizgerätes an die individuellen Druckverluste eines Frischluft-Abgas-Leitungssystems vor. Hierzu wird eine Gebläsedrehzahl und eine Gebläseleistung erfasst und die aufgenommene Leistung bei einer vorgegebenen Drehzahl mit einem Referenzwert verglichen. Nachteilig ist, dass dieses Verfahren nicht ausreichend präzise ist und bei einem Fehler des Gebläses unsichere Betriebszustände des Heizgerätes eintreten können.

Auch bei dem in der EP 2 469 168 A1 vorgeschlagenen Verfahren zum Betreiben eines Gasbrenners für ein Heizgerät wird eine aktuelle Gebläsedrehzahl über das aktuelle Spannungssignal des Gebläses überwacht und mit einer vorgegebenen Soll-Gebläsedrehzahl bzw. mit einem Soll-Spannungssignal verglichen.

Ein Verfahren zur Detektion einer Blockade einer Abgasabführung wird in der EP 3 260 777 A1 vorgeschlagen. Hierzu wird ein Druckkennwert herangezogen, der eine Information über einen Druck innerhalb der Abgasabführung enthält. Der Druckkennwert kann dabei beispielsweise mittels eines Drucksensors in der Abgasführung ermittelt werden. Nachteilig muss somit ein Drucksensor in der Abgasführung installiert werden, bei dem aufgrund der hohen Temperaturen und korrosiven Bedingungen in der Abgasführung eine geringe Standzeit zu erwarten ist.

Hiervon ausgehend ist es Aufgabe der Erfindung, ein Verfahren zum Prüfen einer Abgasanlage eines Heizgerätes, dass eine sichere Detektion eines erhöhten Strömungswiderstandes einer Abgasanlage ermöglicht.

Zudem soll das Verfahren mit einfachen Mitteln durchführbar sein und die Komplexität eines Heizgerätes nicht wesentlich erhöhen.

Diese Aufgaben werden gelöst durch die Merkmale der unabhängigen Patentansprüche. Weitere vorteilhafte Ausgestaltungen der hier vorgeschlagenen Lösung sind in den unabhängigen Patentansprüchen angegeben. Es wird darauf hingewiesen, dass die in den abhängigen Patentansprüchen aufgeführten Merkmale in beliebiger, technologisch sinnvoller, Weise miteinander kombiniert werden können und weitere Ausgestaltungen der Erfindung definieren. Darüber hinaus werden die in den Patentansprüchen angegebenen Merkmale in der Beschreibung näher präzisiert und erläutert, wobei weitere bevorzugte Ausgestaltungen der Erfindung dargestellt werden.

Das hier vorgeschlagene Verfahren ist insbesondere geeignet zur Durchführung mit einem Heizgerät mit einem pneumatischen Gas-Luftverbund. Im Unterschied zu einem elektronischen Gas-Luftverbund können bei einem pneumatischen Gas-Luftverbund Toleranzen des Gasventils nicht durch eine Regelung ausgeglichen werden.

Das erfindungsgemäße Verfahren zum Prüfen einer Abgasanlage eines Heizgerätes umfasst zumindest die folgenden Schritte:
a) Anfahren eines Gebläses als Gasfördereinrichtung des Heizgerätes und Steigern der Leistung der Gasfördereinrichtung,
b) Erfassen eines den Durchfluss des Gasstromes in der Gaszuführung des Heizgerätes charakterisierenden Zuführparameters,
c) Erfassen eines die umgesetzte Leistung der Gasfördereinrichtung charakterisierenden Leistungsparameters bei Erreichen eines Zuführreferenzwertes des in Schritt b) erfassten Zuführparameters,
d) Freigabe des Heizgerätes zur Inbetriebnahme, wenn der die umgesetzte Leistung der Gasfördereinrichtung charakterisierenden Leistungsparameter bei Erreichen des Zuführreferenzwertes niedriger als ein Leistungsreferenzwert der Gasfördereinrichtung ist, wobei der Zuführparameter durch einen in der Gaszuführung angeordneten Drucksensor, einen Druckschalter, dessen Schwellwert dem Zuführreferenzwert entspricht und der ein Gasventil des Heizgeräts schaltet, oder einen Durchflusssensor ermittelt wird und der Leistungsparameter eine Drehzahl der Gasfördereinrichtung ist und der Leistungsreferenzwert eine Referenzdrehzahl ist.

Die Schritte a), b) und c) werden bei einem regulären Betriebsablauf zumindest teilweise parallel durchgeführt und im Anschluss Schritt d). Die Durchführung von Schritt a) kann nach Erreichen des Zuführreferenzwertes in Schritt c) beendet werden.

Die hier vorgeschlagene Lösung beschreibt insbesondere eine besonders einfache und sichere Möglichkeit zur Detektion eines überhöhten Strömungswiderstandes einer Abgasanlage eines Heizgerätes verbunden mit der Möglichkeit eine Inbetriebnahme des Heizgerätes im Falle eines erhöhten Strömungswiderstandes zu blockieren. Vorteilhaft kann das Verfahren auf einfache Weise automatisiert bei jedem Start von Heizgeräten durchgeführt werden, wobei nur geringe bauliche Änderungen am Heizgerät vorzusehen sind.

Zudem ermöglicht das Verfahren eine Prüfung des Strömungswiderstandes einer Abgasanlage eines in Betrieb befindlichen Heizgerätes.

In einem Schritt a) erfolgt ein Anfahren eines Gebläses als Gasfördereinrichtung des Heizgerätes und ein Steigern der Leistung der Gasfördereinrichtung. Eine Gasfördereinrichtung ist hierbei in der Lage einen Gasstrom zu fördern. Heizgeräte, insbesondere Heizgeräte mit einem pneumatischen Gas-Luftverbund, weisen in der Regel ohnehin eine Gasfördereinrichtung zur Zuführung des zu verbrennenden Gasgemisches auf. Diese ohnehin vorhandene Gasfördereinrichtung kann vorteilhaft für die Durchführung des hier vorgeschlagenen Verfahrens eingesetzt werden.

Gemäß einer weiteren vorteilhaften Ausgestaltung wird die Gasfördereinrichtung derart angesteuert, dass die Leistungssteigerung einer Rampenfunktion entspricht. Die Rampe kann dabei einen Rampenstartwert für die Leistung der Gasfördereinrichtung aufweisen, beispielsweise eine Rampenstartdrehzahl, welche dann kontinuierlich gesteigert wird.

In einem Schritt b) erfolgt ein Erfassen eines den Durchfluss des Gasstromes in der Gaszuführung des Heizgerätes charakterisierenden Zuführparameters. Mit anderen Worten ist der Zuführparameter ein Maß für den durch die Gasfördereinrichtung geförderten Volumenstrom.

Der den Durchfluss des Gasstromes in der Gaszuführung des Heizgerätes charakterisierende Zuführparameter kann insbesondere ein durch einen Drucksensor ermittelter Druck in der Gaszuführung des Heizgerätes sein. Vorteilhaft kann der Druck einfach ermittelt werden.

Gemäß einer vorteilhaften Ausgestaltung kann der Druck, als den Durchfluss des Gasstromes in der Gaszuführung des Heizgerätes charakterisierende Zuführparameter, durch einen Drucksensor im Schalldämpfer der Luftansaugung des Heizgerätes ermittelt werden. Vorteilhaft ist dies besonders einfach umsetzbar.

In einer alternativen Ausgestaltung könnte als den Durchfluss des Gasstromes in der Gaszuführung des Heizgerätes charakterisierende Zuführparameter auch ein, beispielsweise durch einen Durchflusssensor ermittelter Volumenstrom sein. Der Durchflusssensor kann dabei beispielsweise in der Luftansaugung des Heizgerätes angeordnet sein.

In einem Schritt c) erfolgt ein Erfassen eines die umgesetzte Leistung der Gasfördereinrichtung charakterisierenden Leistungsparameters bei Erreichen eines Zuführreferenzwertes des in Schritt b) erfassten Zuführparameters.

In einem Schritt d) erfolgt nun eine Freigabe des Heizgerätes zur Inbetriebnahme, wenn der die Leistung der Gasfördereinrichtung charakterisierenden Leistungsparameter bei Erreichen des Zuführreferenzwertes niedriger als ein Referenzwert des Leistungsparameters der Gasfördereinrichtung ist.

Der Zuführreferenzwert kann ein im Vorfeld heizgerätspezifisch ermittelter Wert sein, der einen ausreichend geringen Strömungswiderstand der Abgasanlage anzeigt, sofern der die umgesetzte Leistung der Gasfördereinrichtung charakterisierenden Leistungsparameter niedriger als ein Leistungsreferenzwert des Leistungsparameters ist.

Einer alternativen Ausgestaltung des Verfahrens umfasst zumindest die folgenden Verfahrensschritte:
a1) Anfahren eines Gebläses als Gasfördereinrichtung des Heizgerätes und steigern der Leistung der Gasfördereinrichtung bis zu einem Leistungsreferenzwert,
b1) Erfassen eines den Durchfluss des Gasstromes in der Gaszuführung des Heizgerätes charakterisierenden Zuführparameters,
c1) Freigabe des Heizgerätes zur Inbetriebnahme bei Erreichen eines Zuführreferenzwertes des in Schritt b1) erfassten Zuführparameters, wobei der Zuführparameter durch einen in der Gaszuführung angeordneten Drucksensor, einen Druckschalter, dessen Schwellwert dem Zuführreferenzwert entspricht und der ein Gasventil des Heizgeräts schaltet, oder einen Durchflusssensor ermittelt wird und der Leistungsparameter eine Drehzahl der Gasfördereinrichtung ist und der Leistungsreferenzwert eine Referenzdrehzahl ist.

Gemäß Schritt a1) der alternativen Ausgestaltung des Verfahrens erfolgt die Steigerung der Leistung der Gasfördereinrichtung bis zu einem Leistungsreferenzwert.

In einem Schritt b1) wird ein den Durchfluss des Gasstromes in der Gaszuführung des Heizgerätes charakterisierender Zuführparameter erfasst.

Gemäß einem Schritt c1) erfolgt eine Freigabe des Heizgerätes zur Inbetriebnahme bei Erreichen eines Zuführreferenzwertes des in Schritt b) erfassten Zuführparameters.

Bei dieser alternativen Ausgestaltung des Verfahrens erfolgt die Durchführung der Schritte a1), b1) und c1) zumindest teilweise parallel oder gleichzeitig.

In einer bevorzugten Ausgestaltung des Verfahrens kann der den Durchfluss des Gasstromes in der Gaszuführung des Heizgerätes charakterisierende Zuführparameter ein in der Gaszuführung ermittelter Druck sein, wobei der Druck durch einen Druckschalter ermittelt wird, dessen Schwellwert dem Zuführreferenzwert entspricht und der das Gasventil des Heizgerätes schaltet. Diese Ausgestaltung ist besonders geeignet für die alternative Ausgestaltung des Verfahrens zur Durchführung des Schrittes c1). Ein Vorteil dieser Ausgestaltung liegt in einer besonders einfachen und damit sicheren Durchführung des Verfahrens.

Gemäß einer vorteilhaften Ausgestaltung des Verfahrens kann die Zufuhr von Verbrennungsgas während der Verfahrensdurchführung blockiert sein, beispielsweise durch ein geschlossenes Gasventil. Vorteilhaft kann so ein Austreten von Verbrennungsgas oder Abgas und damit verbundenen Gefahren während der Verfahrensdurchführung ausgeschlossen werden.

Nach einer vorteilhaften Ausgestaltung des Verfahrens kann die Gasfördereinrichtung ein Gebläse sein. Das Steigern der Leistung des Gebläses kann gemäß dieser Ausgestaltung in einer Erhöhung der Gebläsedrehzahl bestehen. Der die umgesetzte Leistung der Gasfördereinrichtung charakterisierenden Leistungsparameter kann die Gebläsedrehzahl sein und die Referenzleistung gemäß den Schritten a1) und d) der alternativen Ausgestaltung kann eine Referenzdrehzahl des Gebläses sein.

Gemäß einer weiteren vorteilhaften Ausgestaltung des Verfahrens kann das Verfahren, wenn die Durchführung nicht zu einer Freigabe des Heizgerätes zur Inbetriebnahme geführt hat, erneut durchgeführt werden.

Gemäß einer weiteren vorteilhaften Ausgestaltung des Verfahrens wird eine Inbetriebnahme des Heizgerätes nach einer definierten Anzahl von Verfahrensdurchläufen ohne Freigabe des Heizgerätes blockiert. So kann ein Betreiben des Heizgerätes mit einem erhöhten Strömungswiderstand der Abgasanlage wirkungsvoll ausgeschlossen werden. Die definierte Anzahl von Verfahrensdurchläufen bis zur Blockierung der Inbetriebnahme kann beispielsweise drei betragen. Durch eine mehrfache Ausführung des vorgeschlagenen Verfahrens kann vorteilhaft eine Fehldetektion eines hohen Strömungswiderstandes der Abgasanlage weitestgehend ausgeschlossen werden.

Nach einer bevorzugten Ausgestaltung des Verfahrens erfolgt im Rahmen der Freigabe des Heizgerätes ein Öffnen des Gasventils für die Zuführung des Verbrennungsgases und ein Einleiten eines Zündvorganges.

Nach einer weiteren vorteilhaften Ausgestaltung des Verfahrens erfolgt bei in Betrieb befindlichem Heizgerät in einem Schritt f) eine Außerbetriebnahme des Heizgerätes sofern
- eine Funktion eines die Leistung der Gasfördereinrichtung charakterisierenden Leistungsparameters größer als ein Leistungsreferenzwert ist, oder
- ein die Leistung der Gasfördereinrichtung charakterisierender Leistungsparameter größer als eine Funktion eines Leistungsreferenzwertes ist.

Dieser zusätzliche Verfahrensschritt ermöglicht eine Prüfung des Strömungswiderstandes der Abgasanlage des Heizgerätes, während dieses in Betrieb ist. In einer bevorzugten Ausgestaltung ist die Funktion des die Leistung der Gasfördereinrichtung charakterisierenden Leistungsparameters und/ oder die Funktion des Leistungsreferenzwertes eine lineare Funktion oder ein Faktor. Ein Faktor kann beispielsweise als Quotient zwischen einem ermittelten Leistungswert und dem Leistungsreferenzwert ermittelt werden. Der ermittelte Leistungswert ist dabei die gemessene Leistung (insbesondere Gebläsedrehzahl) bei Erreichen des Zuführreferenzwertes bei jedem Anfahren des Heizgerätes bei einer Wärmeanforderung im Betrieb.

Nach einer Außerbetriebnahme des Heizgerätes in Schritt f) kann das vorgeschlagene Verfahren erneut durchgeführt werden. Im Falle eines erhöhten Strömungswiderstandes der Abgasanlage kann nach der Durchführung einer definierten Anzahl von Verfahrensdurchläufen ohne Freigabe des Heizgerätes zur Inbetriebnahme eine Inbetriebnahme blockiert werden.

Nach einem weiteren Aspekt wird auch ein Computerprogramm vorgeschlagen, welches zur (zumindest teilweisen) Durchführung eines hier vorgestellten Verfahrens eingerichtet ist. Dies betrifft mit anderen Worten insbesondere ein Computerprogramm(-produkt), umfassend Befehle, die bei der Ausführung des Programms durch einen Computer diesen veranlassen, ein hier beschriebenes Verfahren auszuführen.

Nach einem weiteren Aspekt wird auch ein maschinenlesbares Speichermedium vorgeschlagen, auf dem das Computerprogramm gespeichert ist.

Regelmäßig handelt es sich bei dem maschinenlesbaren Speichermedium um einen computerlesbaren Datenträger.

Nach einem weiteren Aspekt wird auch ein Steuergerät für ein Heizgerät vorgeschlagen, eingerichtet zur Durchführung eines hier vorgestellten Verfahrens. Das Steuergerät kann hierzu beispielsweise einen Prozessor aufweisen bzw. über diesen verfügen. In diesem Zusammenhang kann der Prozessor beispielsweise das auf einem Speicher (des Steuergeräts) hinterlegte Verfahren ausführen.

Nach einem weiteren Aspekt wird auch ein Heizgerät mit einem hier vorgestellten Steuergerät vorgeschlagen. Bei dem Heizgerät handelt es sich insbesondere um ein Gasheizgerät mit einem pneumatischen Gas-Luftverbund. Das Heizgerät kann eine Einrichtung zur Erfassung eines den Durchfluss des Gasstromes in der Gaszuführung des Heiz-gerätes charakterisierenden Zuführparameters, beispielsweise einen Drucksensor oder einen Durchflusssensor aufweisen. In einer bevorzugten Ausgestaltung weist das Heizgerät einen Drucksensor in einem Schalldämpfer der Gaszuführung auf.

Die Verwendung eines Heizgeräts für die Prüfung des Strömungswiderstandes einer Abgasanlage des Heizgerätes ist vorteilhaft. Dies bezieht sich insbesondere auf die Verwendung eines den Durchfluss des Gasstromes in der Gaszuführung des Heizgerätes charakterisierenden Zuführparameters, beispielsweise einem Druck oder einem Volumenstrom, der bevorzugt in der Gaszuführung des Heizgerätes erfasst wird und auf die Verwendung eines die umgesetzte Leistung der Gasfördereinrichtung charakterisierenden Leistungsparameters, insbesondere der Drehzahl eine die Gasfördereinrichtung repräsentierenden Gebläses.

Hier werden somit ein Verfahren zum Prüfen einer Abgasanlage eines Heizgerätes, ein Computerprogramm, ein Steuergerät und ein Heizgerät angegeben, welche eine sichere und einfache Prüfung der Abgasanlage eines Heizgerätes auf einen erhöhten Strömungswiderstand ermöglichen. In besonders vorteilhafter Weise kann ein Heizgerät mit den hier vorgeschlagenen Verfahren bei einer blockierten Abgasanlage für eine Inbetriebnahme gesperrt werden. Gleichfalls vorteilhaft sind nur sehr geringe Änderungen an der Konfiguration eines Heizgerätes nach dem Stand der Technik notwendig um eine Durchführung des erfindungsgemäßen Verfahrens zur ermöglichen. Nicht zuletzt kann die Verfahrensdurchführung vollautomatisiert beispielsweise durch ein Steuergerät vor jeder Inbetriebnahme des Heizgerätes durchgeführt werden, wodurch menschliches Versagen ausgeschlossen werden kann.

Die Erfindung sowie das technische Umfeld werden nun anhand der Figuren detailliert erläutert. Die Figuren zeigen Ausführungsbeispiele, auf die die Erfindung jedoch nicht beschränkt sein soll. Es stellen schematisch dar:
- Fig. 1:: einen Ablauf eines hier vorgeschlagenen Verfahrens,
- Fig. 2:: einen Ablauf einer alternativen Ausgestaltung eines hier vorgeschlagenen Verfahrens,
- Fig. 3:: ein hier vorgeschlagenes Heizgerät, und
- Fig. 4:: ein Diagramm zur Veranschaulichung der in dem hier vorgeschlagenen Verfahren verwendeten Parameter.

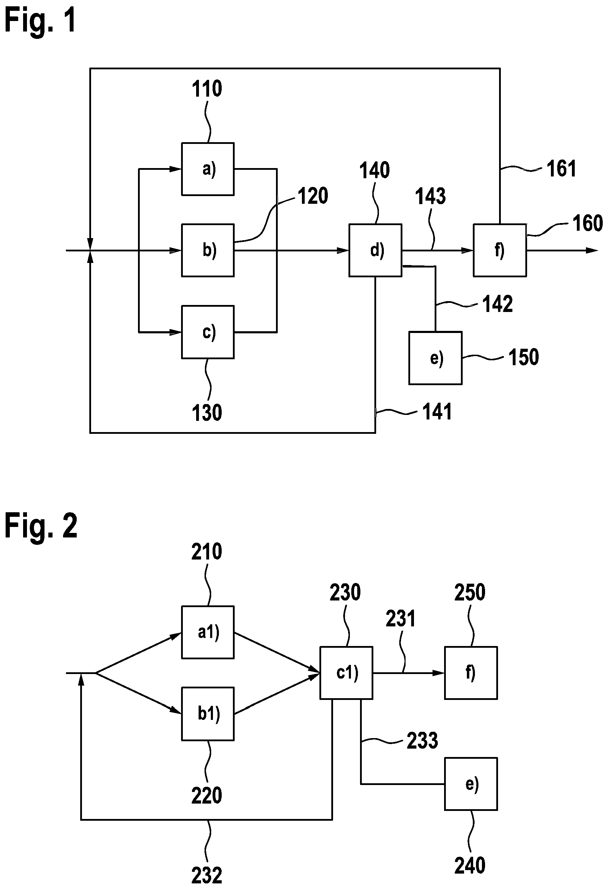

Fig. 1 zeigt beispielhaft und schematisch einen Ablauf eines hier vorgeschlagenen Verfahrens. Das Verfahren dient zum Prüfen der Abgasanlage eines Heizgerätes 1, insbesondere kann geprüft werden, ob eine Abgasanlage des Heizgerätes 1 einen erhöhten Strömungswiderstand aufweist, also zumindest teilweise blockiert ist. Das Heizgerät 1 kann ein gasbetriebenes Heizgerät 1 mit einem pneumatischen Gas-Luftverbund sein.

Die mit den Blöcken 110, 120, 130, 140, 150 und 160 dargestellte Reihenfolge der Schritte a), b), c), d), e und f) kann sich bei einem regulären Betriebsablauf einstellen. Beispielsweise beim Einschalten des Heizgerätes 1 kann das Verfahren sinnvoll durchgeführt werden um vor Inbetriebnahme die Funktionalität der Abgasanlage zu prüfen. Das Gasventil des Heizgerätes 1 kann bevorzugt bei der Verfahrensdurchführung zur Erhöhung der Sicherheit geschlossen sein.

In einem Block 110 erfolgt gemäß Schritt a) ein Anfahren einer Gasfördereinrichtung 13 des Heizgerätes 1 und steigern der Leistung der Gasfördereinrichtung 13. Ein Steuergerät 14 des Heizgerätes 1 startet die Gasfördereinrichtung 13, die als Gebläse ausgebildet sein kann und steigert dessen Leistung, also erhöht die Drehzahl des Gebläses. Das Steigern der Leistung der Gasfördereinrichtung 13 erfolgt dabei im Leistungsspektrum der Gasfördereinrichtung 13 und wird somit bei Erreichen der maximalen Leistung der Gasfördereinrichtung 13 abgebrochen.

Parallel zum Steigern der Leistung der Gasfördereinrichtung 13 erfolgt in Block 120 gemäß Schritt b) ein Erfassen eines den Durchfluss des Gasstromes in der Gaszuführung des Heizgerätes charakterisierenden Zuführparameters. Der den Durchfluss des Gasstromes in der Gaszuführung des Heizgerätes charakterisierende Zuführparameter kann beispielsweise ein im Schalldämpfer 11 mittels eines Drucksensors 12 erfasster Druck sein.

Gleichfalls parallel erfolgt in Block 130 gemäß Schritt c) ein Erfassen eines die Leistung der Gasfördereinrichtung charakterisierenden Leistungsparameters bei Erreichen eines Zuführreferenzwertes des in Schritt b) erfassten Zuführparameters. Der die Leistung der Gasfördereinrichtung charakterisierenden Leistungsparameter kann dabei die Drehzahl eines Gebläses sein, das die Gasfördereinrichtung repräsentiert. Der Zuführreferenzwert kann ein im Vorfeld heizgerätespezifisch ermittelter Wert sein.

Mit Erreichen des Zuführreferenzwertes kann die Durchführung der Schritte a) und b) abgebrochen werden.

In Block 140) kann nun gemäß Schritt d) der in Schritt c) erfasste, die Leistung der Gasfördereinrichtung charakterisierende, Leistungsparameter bei Erreichen des Zuführreferenzwertes mit einem Referenzwert des Leistungsparameters der Gasfördereinrichtung verglichen werden. Liegt der Leistungsparameter der Gasfördereinrichtung 13 über dem Referenzwert des Leistungsparameters wird gemäß Pfad 141 ein Neustart des Verfahrens durch das Steuergerät 14 veranlasst. Gleiches gilt, wenn die maximale Leistung der Gasfördereinrichtung 13 erreicht wurde, ohne dass der Zuführreferenzwert erreicht wurde.

Beispielsweise nach drei Verfahrensdurchläufen ohne Erreichen des Zuführreferenzwertes oder wenn der in Schritt b) erfasste Leistungsparameter höher als der Referenzwert des Leistungsparameters ist, erfolgt gemäß Pfad 143 eine Durchführung des Schrittes e) in Block 150, wonach das Heizgerät 1 blockiert wird. Das Blockieren des Heizgerätes 1 kann dabei so ausgeführt sein, dass diese nur von einem Servicetechniker und nicht vom Nutzer selbst zu beenden ist.

Ist in Schritt d) der in Schritt b) erfasste Leistungsparameter höher als der Referenzwert des Leistungsparameters erfolgt eine Freigabe des Heizgerätes 1 zur Inbetriebnahme. Das Steuergerät 14 führt nun bevorzugt automatisch den Startvorgang des Heizgerätes 1 durch.

Bei in Betrieb befindlichem Heizgerät 1 kann in Block 160 die Durchführung des Schrittes f) erfolgen. Der Schritt f) dient einer Prüfung des Strömungswiderstandes der Abgasanlage während des Heizbetriebes. Hierfür kann ein die Leistung der Gasfördereinrichtung charakterisierender Leistungsparameter und eine Endleistung herangezogen werden. Die beiden Werte werden mit einer Rechenoperation verknüpft und verglichen. Somit wird in Schritt f) verglichen, ob eine Funktion eines die Leistung der Gasfördereinrichtung charakterisierenden Leistungsparameters größer als eine Endleistung ist, oder ein die Leistung der Gasfördereinrichtung charakterisierender Leistungsparameter größer als eine Funktion einer Endleistung ist. Wird die Endleistung oder die Funktion der Endleistung überschritten, wird das Heizgerät 1 außer Betrieb genommen. Gemäß Pfad 161 kann das Steuergerät 14 nach Außerbetriebnahme des Heizgerätes 1 eine erneute Verfahrensdurchführung der Schritte a) - d) veranlassen.

Die Funktion des die Leistung der Gasfördereinrichtung charakterisierenden Leistungsparameters oder die Funktion der Endleistung kann dabei in einem Faktor bestehen. Der Faktor kann beispielsweise durch einen Quotienten aus dem Leistungsparamater beim Anfahren des Heizgerätes im Betrieb (bei einer Wärmeanforderung) und der Referenzleistung ermittelt werden.

Fig. 2 zeigt gleichfalls beispielhaft und schematisch einen Ablauf einer alternativen Ausgestaltung eines hier vorgeschlagenen Verfahrens. Auch diese alternative Ausgestaltung des Verfahrens dient zum Prüfen einer Abgasanlage eines Heizgerätes 1, insbesondere kann geprüft werden, ob die Abgasanlage des Heizgerätes 1 einen erhöhten Strömungswiderstand aufweist, also zumindest teilweise blockiert ist. Das Heizgerät 1 kann ein gasbetriebenes Heizgerät 1 mit einem pneumatischen Gas-Luftverbund sein.

In Block 210 erfolgt gemäß Schritt a1) ein Anfahren einer Gasfördereinrichtung 13 des Heizgerätes 1 und steigern der Leistung der Gasfördereinrichtung 13 bis zu einer Endleistung. Ein Steuergerät 14 des Heizgerätes 1 kann hierzu die Gasfördereinrichtung 13 anfahren. Die Gasfördereinrichtung 13 kann auch hier als Gebläse ausgebildet sein kann und die Steigerung der Leistung in einer Erhöhung der Drehzahl bestehen. Die Leistung der Gasfördereinrichtung 13 wird bis zu einer Endleistung erhöht, also bis zu einer Enddrehzahl.

Parallel erfolgt in Block 220 entsprechend Schritt b1) ein Erfassen eines den Durchfluss des Gasstromes in der Gaszuführung des Heizgerätes 1 charakterisierenden Zuführparameters.

Sobald in Block 130 gemäß Schritt c1) der in Schritt b1) erfasste Zuführparameter einen Zuführreferenzwert erreicht, kann eine Freigabe des Heizgerätes 1 zur Inbetriebnahme gemäß Pfad 231 erfolgen.

Sollte der Zuführreferenzwert nicht erreicht werden, bevor im Rahmen von Schritt a1) die Endleistung erreicht wird, kann eine erneute Verfahrensdurchführung gemäß Pfad 232 erfolgen. Sollte das Verfahren bereits mehrfach, beispielsweise dreimalig, durchlaufen sein, ohne dass eine Freigabe zur Inbetriebnahme des Heizgerätes 1 erfolgt ist, kann gemäß Pfad 233 die Durchführung von Schritt e) erfolgen, in dem das Heizgerät 1 für eine Inbetriebnahme gesperrt wird.

Nach einer Freigabe des Heizgerätes 1 zur Inbetriebnahme in Schritt c1) kann nach einer Inbetriebnahme eine Durchführung des Schrittes f) analog zu der Ausgestaltung des Verfahrens gemäß Fig. 1 erfolgen.

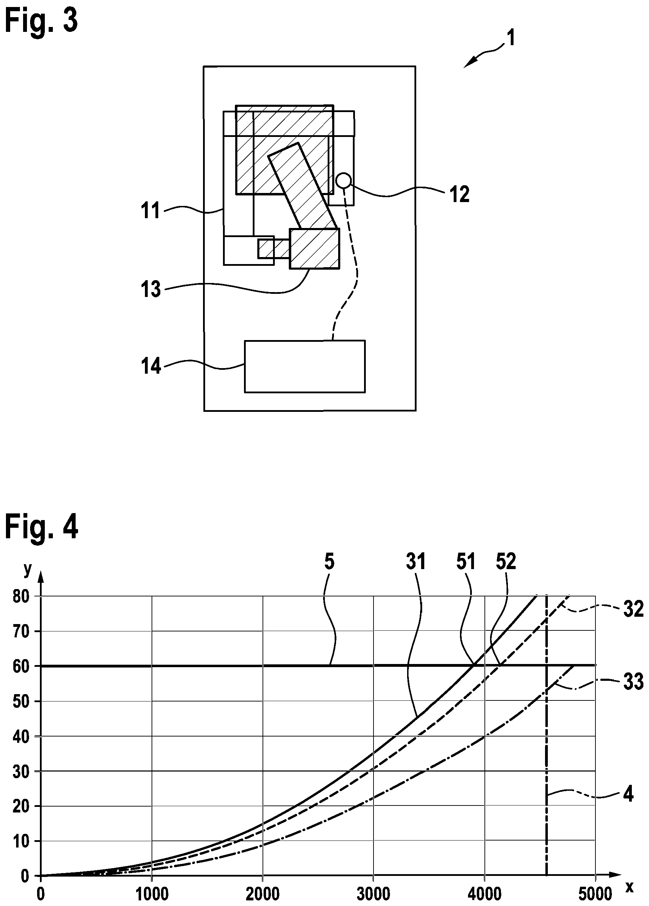

Fig. 3 zeigt beispielhaft und schematisch ein hier vorgeschlagenes Heizgerät 1. Diese kann eine Gasfördereinrichtung 13 aufweisen, die bevorzugt als Gebläse ausgebildet ist. Der Luftfördereinrichtung kann, in Luftströmungsrichtung gesehen, ein Schalldämpfer 11 nachgeordnet sein. Innerhalb des Schalldämpfers 11 kann ein Drucksensor 12 angeordnet sein, der den Druck in der Luftansaugung als ein, den Durchfluss des Gasstromes in der Gaszuführung des Heizgerätes 1 charakterisierender Zuführparameter.

Das Heizgerät 1 kann ein Steuergerät 14 aufweisen, das zur Durchführung des hier vorgeschlagenen Verfahrens eingerichtet ist und mit dem Drucksensor 12 elektrisch verbindbar ist.

Fig. 4 zeigt beispielhaft ein Diagramm zur Veranschaulichung der in dem hier vorgeschlagenen Verfahren verwendeten Parameter. So entspricht die x-Achse des gezeigten Diagramms dem die Leistung der Gasfördereinrichtung 13 charakterisierenden Leistungsparameter. Beispielhaft ist der Leistungsparameter eine Drehzahl eines die Gasfördereinrichtung repräsentierenden Gebläses, die hier in Umdrehungen pro Minute angegeben ist. Die y-Achse des gezeigten Diagramms entspricht dem den Durchfluss des Gasstromes in der Gaszuführung des Heizgerätes 1 charakterisierenden Zuführparameters, welcher beispielhaft der im Schalldämpfer 11 des Heizgerätes 1 durch einen Drucksensor 12 gemessene und in Pascal angegebene Druck ist.

In Fig. 4 ist eine Referenzkurve 31 ersichtlich, die den Druck im Schalldämpfer 11 bei steigender Leistung (Drehzahl) der Gasfördereinrichtung 13 bei ungestörter Abgasanlage darstellt.

Eine waagerechte Linie zeigt den Zuführreferenzwert 5. Im vorliegenden Beispiel beträgt dieser 59 Pa. Eine senkrechte Linie zeigt die Endleistung 4 der Gasfördereinrichtung 13, die beispielhaft im vorliegenden Fall 1600 Umdrehungen pro Minute beträgt. Die Referenzkurve 31 erreicht den Zuführreferenzwert 5 in einem Punkt 51. Die Leistung (Drehzahl) der Gasfördereinrichtung 13 liegt im Punkt 51 unter der Endleistung 4 und das Heizgerät 1 kann somit gestartet werden, da kein erhöhter Strömungswiderstand in der Abgasanlage festgestellt werden konnte.

Eine erste Messkurve 32 zeigt den gleichen Zusammenhang bei einem leicht erhöhten Strömungswiderstand der Abgasanlage, wobei die erforderliche Leistung (Drehzahl) der Gasfördereinrichtung 13 größer ist, um den erhöhten Strömungswiderstand zu überwinden. Die erste Messkurve 32 erreicht den Zuführreferenzwert 5 in einem Punkt 52, wobei die zugehörige Leistung (Drehzahl) der Gasfördereinrichtung 13 unterhalb der Endleistung 4 liegt. Somit kann auch für die erste Messkurve 32 das Heizgerätes 1 zur Inbetriebnahme frei gegeben werden, da trotz des leicht erhöhten Strömungswiderstandes ein sicherer Betrieb des Heizgerätes 1 gewährleistet ist.

Eine zweite Messkurve 33 zeigt den gleichen Zusammenhang bei einem deutlich erhöhten Strömungswiderstand der Abgasanlage. Die zweite Messkurve 33 erreicht den Zuführreferenzwert 5 bei einer Leistung (Drehzahl) der Gasfördereinrichtung 13, die über der Endleistung 4 liegt. Somit ist der detektierte Strömungswiderstand der Abgasanlage zu hoch und es erfolgt keine Freigabe des Heizgerätes 1 zur Inbetriebnahme.

Ein hier vorgeschlagenes Verfahren gemäß Fig. 1 würde in Schritt d) erkennen, dass der die umgesetzte Leistung der Gasfördereinrichtung 13 charakterisierenden Leistungsparameter bei Erreichen des Zuführreferenzwertes 5 größer als der Leistungsreferenzwert 4 der Gasfördereinrichtung 13 ist und keine Freigabe zur Inbetriebnahme des Heizgerätes 1 anzeigen.

Ein hier vorgeschlagenes Verfahren gemäß Fig. 2 würde bei der Durchführung des Schrittes a) die Leistung der Gasfördereinrichtung 13 bis zum Leistungsreferenzwert 4 steigern ohne dass der Zuführreferenzwert 5 erreicht wird und daher gleichfalls keine Freigabe zur Inbetriebnahme des Heizgerätes 1 anzeigen.

### Bezugszeichenliste

- 1: Heizgerät
- 11: Schalldämpfer
- 12: Drucksensor
- 13: Gasfördereinrichtung
- 14: Steuergerät
- 31: Referenzkurve
- 32: erste Messkurve
- 33: zweite Messkurve
- 4: Leistungsreferenzwert
- 5: Zuführreferenzwert

## Patentansprüche

1. Verfahren zum Prüfen einer Abgasanlage eines Heizgerätes (1) umfassend zumindest die folgenden Schritte:
a) Anfahren eines Gebläses als Gasfördereinrichtung (13) des Heizgerätes (1) und steigern der Leistung der Gasfördereinrichtung (13),
b) Erfassen eines den Durchfluss des Gasstromes in der Gaszuführung des Heizgerätes (1) charakterisierenden Zuführparameters,
c) Erfassen eines die Leistung der Gasfördereinrichtung (13) charakterisierenden Leistungsparameters bei Erreichen eines Zuführreferenzwertes (5) des in Schritt b) erfassten Zuführparameters,
d) Freigabe des Heizgerätes (1) zur Inbetriebnahme wenn der die umgesetzte Leistung der Gasfördereinrichtung (13) charakterisierende Leistungsparameter bei Erreichen des Zuführreferenzwertes (5) niedriger als ein Leistungsreferenzwert (4) des Leistungsparameters der Gasfördereinrichtung (13) ist,
wobei der Zuführparameter durch einen in der Gaszuführung angeordneten Drucksensor (12), einen Druckschalter, dessen Schwellwert dem Zuführreferenzwert (5) entspricht und der ein Gasventil des Heizgeräts (1) schaltet, oder einen Durchflusssensor ermittelt wird und der Leistungsparameter eine Drehzahl der Gasfördereinrichtung (13) ist und der Leistungsreferenzwert (4) eine Referenzdrehzahl ist.

2. Verfahren zum Prüfen einer Abgasanlage eines Heizgerätes (1) umfassend zumindest die folgenden Schritte:
a1) Anfahren eines Gebläses als Gasfördereinrichtung (13) des Heizgerätes (1) und steigern der Leistung der Gasfördereinrichtung (13) bis zu einem Leistungsreferenzwert (4),
b1) Erfassen eines den Durchfluss des Gasstromes in der Gaszuführung des Heizgerätes (1) charakterisierenden Zuführparameters,
c1) Freigabe des Heizgerätes (1) zur Inbetriebnahme bei Erreichen eines Zuführreferenzwertes (5) des in Schritt b1) erfassten Zuführparameters,
wobei der Zuführparameter durch einen in der Gaszuführung angeordneten Drucksensor (12), einen Druckschalter, dessen Schwellwert dem Zuführreferenzwert (5) entspricht und der ein Gasventil des Heizgeräts (1) schaltet, oder einen Durchflusssensor ermittelt wird und der Leistungsparameter eine Drehzahl der Gasfördereinrichtung (13) ist und der Leistungsreferenzwert (4) eine Referenzdrehzahl ist.

3. Verfahren nach einem der vorangehenden Ansprüche, wobei das Verfahren erneut durchgeführt wird, wenn keine Freigabe des Heizgerätes (1) erreicht wurde.

4. Verfahren nach Anspruch 3, wobei nach dem Durchführen einer definierten Anzahl von Verfahrensdurchläufen ohne Freigabe des Heizgerätes (1) das Heizgerät (1) für eine Inbetriebnahme gesperrt wird.

5. Verfahren nach einem der vorangehenden Ansprüche, wobei bei der Freigabe des Heizgerätes (1) ein Gasventil des Heizgerätes (1) geöffnet und ein Zündvorgang erfolgt.

6. Verfahren nach einem der vorangehenden Ansprüche, wobei in einem Schritt e) nach der Inbetriebnahme des Heizgerätes (1) für den Fall, dass
eine Funktion eines die Leistung der Gasfördereinrichtung (13) charakterisierenden Leistungsparameters größer als ein Leistungsreferenzwert (4) des Leistungsparameters ist, oder
ein die Leistung der Gasfördereinrichtung (13) charakterisierender Leistungsparameter größer als eine Funktion eines Leistungsreferenzwertes (4) des Leistungsparameters ist, das Heizgerät (1) außer Betrieb genommen wird.

7. Verfahren nach einem der vorangehenden Ansprüche, wobei der in Schritt b) erfasste Zuführparameter ein durch einen Drucksensor (12) ermittelter Druck in der Gaszuführung des Heizgerätes (1) ist.

8. Verfahren nach Anspruch 7, wobei der Drucksensor (12) in einem Schalldämpfer (11) der Luftansaugung des Heizgerätes (1) angeordnet ist.

9. Verfahren nach einem der Ansprüche 7 oder 8, wobei der Drucksensor (12) ein Druckschalter ist, der ein Gasventil des Heizgerätes (1) schaltet.

10. Heizgerät (1), aufweisend eine Gasfördereinrichtung (13) und eine Abgasanlage sowie Mittel zum Erfassen eines Zuführparameters in einer Gaszuführung des Heizgerätes und ein Steuergerät (14), eingerichtet zur Durchführung eines Verfahren nach einem der Ansprüche 1 bis 9.

11. Steuergerät (14) für ein Heizgerät (1) nach Anspruch 10, eingerichtet zur Durchführung eines Verfahrens nach einem der Ansprüche 1 bis 9.

12. Computerprogramm, umfassend Befehle, welche ein Heizgerät nach Anspruch 10 oder ein Steuergerät nach Anspruch 11 dazu veranlassen, ein Verfahren nach einem der Ansprüche 1 bis 9 auszuführen.

13. Maschinenlesbares Speichermedium, auf dem das Computerprogramm nach Anspruch 12 gespeichert ist.

## Claims

1. Method for testing an exhaust system of a heating appliance (1) comprising at least the following steps:
a) starting up a fan as a gas conveying device (13) of the heating appliance (1) and increasing the output of the gas conveying device (13),
b) detecting a feed parameter characterising the flow rate of the gas flow in the gas feed of the heating appliance (1),
c) detecting a performance parameter characterising the performance of the gas feed device (13) when a feed reference value (5) of the feed parameter detected in step b) is reached,
d) enabling the heating appliance (1) for commissioning if the power parameter characterising the converted power of the gas feed device (13) is lower than a power reference value (4) of the power parameter of the gas feed device (13) when the feed reference value (5) is reached,
wherein the feed parameter is determined by a pressure sensor (12) arranged in the gas feed, a pressure switch whose threshold value corresponds to the feed reference value (5) and which switches a gas valve of the heating appliance (1), or a flow sensor, and the power parameter is a rotational speed of the gas feed device (13) and the power reference value (4) is a reference rotational speed.

2. Method for testing an exhaust system of a heating appliance (1) comprising at least the following steps:
a1) Starting up a fan as a gas conveying device (13) of the heating appliance (1) and increasing the power of the gas conveying device (13) up to a power reference value (4),
b1) detection of a feed parameter characterising the flow rate of the gas flow in the gas feed of the heating appliance (1),
c1) enabling the heating appliance (1) for commissioning when a feed reference value (5) of the feed parameter detected in step b) is reached,
wherein the feed parameter is determined by a pressure sensor (12) arranged in the gas feed, a pressure switch whose threshold value corresponds to the feed reference value (5) and which switches a gas valve of the heating appliance (1), or a flow sensor, and the power parameter is a rotational speed of the gas feed device (13) and the power reference value (4) is a reference rotational speed.

3. The method according to any one of the preceding claims, wherein the method is performed again if no release of the heating appliance (1) has been achieved.

4. Method according to claim 3, wherein after carrying out a defined number of process runs without enabling the heating appliance (1), the heating appliance (1) is blocked for commissioning.

5. Method according to one of the preceding claims, wherein when the heating appliance (1) is released, a gas valve of the heating appliance (1) is opened and an ignition process takes place.

6. Method according to one of the preceding claims, wherein in a step e) after commissioning of the heating appliance (1) in the event that
a function of a power parameter characterising the power of the gas delivery device (13) is greater than a power reference value (4) of the power parameter, or
a performance parameter characterising the performance of the gas conveying device (13) is greater than a function of a performance reference value (4) of the performance parameter, the heating appliance (1) is taken out of operation.

7. Method according to one of the preceding claims, wherein the supply parameter detected in step b) is a pressure in the gas supply of the heating appliance (1) determined by a pressure sensor (12).

8. Method according to claim 7, wherein the pressure sensor (12) is arranged in a silencer (11) of the air intake of the heating appliance (1).

9. Method according to one of claims 7 or 8, wherein the pressure sensor (12) is a pressure switch that switches a gas valve of the heating appliance (1).

10. Heating appliance (1), comprising a gas feed device (13) and an exhaust gas system as well as means for detecting a feed parameter in a gas feed of the heating appliance and means arranged for carrying out a method according to one of claims 1 to 9.

11. A control device (14) for a heating appliance (1) according to claim 10, adapted to perform a method according to any one of claims 1 to 9.

12. A computer program comprising instructions which cause a heating appliance according to claim 10 or a control device according to claim 11 to perform a method according to any one of claims 1 to 9.

13. Machine-readable storage medium on which the computer program according to claim 12 is stored.

## Revendications

1. Procédé de vérification d'un système d'échappement d'un appareil de chauffage (1) comprenant au moins les étapes suivantes :
a) démarrage d'un ventilateur en tant qu'appareil de transport de gaz (13) de l'appareil de chauffage (1) et augmentation de la puissance de l'appareil de transport de gaz (13),
b) détection d'un paramètre d'alimentation caractérisant le débit du flux de gaz dans l'alimentation en gaz de l'appareil de chauffage (1),
c) détection d'un paramètre de puissance caractérisant la puissance de l'appareil de transport de gaz (13) lorsqu'une valeur de référence d'alimentation (5) du paramètre d'alimentation détecté à l'étape b) est atteinte,
d) libération de l'appareil de chauffage (1) pour la mise en service lorsque le paramètre de puissance caractérisant la puissance convertie de l'appareil de transport de gaz (13) est inférieur à une valeur de référence de puissance (4) du paramètre de puissance de l'appareil de transport de gaz (13) lorsque la valeur de référence d'alimentation (5) est atteinte,
dans lequel le paramètre d'alimentation est déterminé par un capteur de pression (12) disposé dans l'alimentation en gaz, un pressostat dont la valeur de seuil correspond à la valeur de référence d'alimentation (5) et qui commute une vanne de gaz de l'appareil de chauffage (1), ou un capteur de débit, et le paramètre de puissance est une vitesse de rotation de l'appareil de transport de gaz (13), et la valeur de référence de puissance (4) est une vitesse de rotation de référence.

2. Procédé de vérification d'un système d'échappement d'un appareil de chauffage (1) comprenant au moins les étapes suivantes :
a1) démarrage d'un ventilateur en tant qu'appareil de transport de gaz (13) de l'appareil de chauffage (1) et augmentation de la puissance de l'appareil de transport de gaz (13) jusqu'à une valeur de référence de puissance (4),
b1) détection d'un paramètre d'alimentation caractérisant le débit du flux de gaz dans l'alimentation en gaz de l'appareil de chauffage (1),
c1) libération de l'appareil de chauffage (1) pour la mise en service lorsqu'une valeur de référence d'alimentation (5) du paramètre d'alimentation détecté à l'étape b1) est atteinte,
dans lequel le paramètre d'alimentation est déterminé par un capteur de pression (12) disposé dans l'alimentation en gaz, un pressostat dont la valeur de seuil correspond à la valeur de référence d'alimentation (5) et qui commute une vanne de gaz de l'appareil de chauffage (1), ou un capteur de débit, et le paramètre de puissance est une vitesse de rotation de l'appareil de transport de gaz (13) et la valeur de référence de puissance (4) est une vitesse de rotation de référence.

3. Procédé selon l'une quelconque des revendications précédentes, dans lequel le procédé est à nouveau mis en œuvre si aucune libération de l'appareil de chauffage (1) n'a été atteinte.

4. Procédé selon la revendication 3, dans lequel l'appareil de chauffage (1) est verrouillé pour une mise en service après la mise en œuvre d'un nombre défini d'exécutions du procédé sans libération de l'appareil de chauffage (1).

5. Procédé selon l'une quelconque des revendications précédentes, dans lequel, lors de la libération de l'appareil de chauffage (1), une vanne de gaz de l'appareil de chauffage (1) est ouverte et un processus d'allumage est effectué.

6. Procédé selon l'une quelconque des revendications précédentes, dans lequel, dans une étape e) après la mise en service de l'appareil de chauffage (1), dans le cas où
une fonction d'un paramètre de puissance caractérisant la puissance de l'appareil de transport de gaz (13) est supérieure à une valeur de référence de puissance (4) du paramètre de puissance, ou
un paramètre de puissance caractérisant la puissance de l'appareil de transport de gaz (13)
est supérieur à une fonction d'une valeur de référence de puissance (4) du paramètre de puissance, l'appareil de chauffage (1) est mis hors service.

7. Procédé selon l'une quelconque des revendications précédentes, dans lequel le paramètre d'alimentation détecté à l'étape b) est une pression dans l'alimentation en gaz de l'appareil de chauffage (1) déterminée par un capteur de pression (12).

8. Procédé selon la revendication 7, dans lequel le capteur de pression (12) est disposé dans un silencieux (11) de l'admission d'air de l'appareil de chauffage (1).

9. Procédé selon l'une quelconque des revendications 7 ou 8, dans lequel le capteur de pression (12) est un pressostat qui commute une vanne de gaz de l'appareil de chauffage (1).

10. Appareil de chauffage (1) présentant un appareil de transport de gaz (13) et un système d'échappement ainsi que des moyens de détection d'un paramètre d'alimentation dans une alimentation en gaz de l'appareil de chauffage et un appareil de commande (14) configuré pour mettre en œuvre un procédé selon l'une quelconque des revendications 1 à 9.

11. Appareil de commande (14) pour un appareil de chauffage (1) selon la revendication 10, configuré pour mettre en œuvre un procédé selon l'une quelconque des revendications 1 à 9.

12. Programme informatique comprenant des instructions qui amènent un appareil de chauffage selon la revendication 10 ou un appareil de commande selon la revendication 11 à mettre en œuvre un procédé selon l'une quelconque des revendications 1 à 9.

13. Support de stockage lisible par machine sur lequel le programme informatique selon la revendication 12 est stocké.
